# EUROPEAN PATENT SPECIFICATION

(11) **EP 4 002 082 B1**
(45) Date of publication and mention of the grant of the patent: **10.01.2024**
(21) Application number: 20208009.9
(22) Date of filing: 17.11.2020
(51) Int. Cl.: G06F 3/12, G03G 15/00, G06K 15/00

(54) **A PRINTER AND A METHOD FOR PLANNING A USE OF AN INPUT MODULE OF A PRINTER**
DRUCKER UND VERFAHREN ZUR PLANUNG DER BENUTZUNG EINES EINGABEMODULS EINES DRUCKERS
IMPRIMANTE ET PROCÉDÉ DE PLANIFICATION D'UNE UTILISATION D'UN MODULE D'ENTRÉE D'UNE IMPRIMANTE

(43) Date of publication of application: 25.05.2022
(73) Proprietor: Canon Production Printing Holding B.V., 5914 HH Venlo (NL)
(72) Inventor: VAN VLIEMBERGEN, Eduardus J.W., Venlo (NL); VAN ROSSUM, Elsemieke P.A., Venlo (NL)
(74) Representative: Canon Production Printing IP Department

(56) References cited:
- US-A- 5 081 595
- US-A1- 2005 213 996
- US-A1- 2010 034 550

## Description

### FIELD OF THE INVENTION

The present invention relates to a method for planning a use of an input module of a printer, the printer comprising a print engine, a print controller and a plurality of input modules for holding print medium to be printed upon by the print engine, the method comprising the step of the print controller determining for each input module first metadata of the input module and second metadata of the print medium which is present in the input module.

The input module may also be referred to as an input holder. The input module may also be referred to by the abbreviation "PIM" which means "Paper Input Module". However, a print medium may also be another printable material than paper. The input module may comprise one or more trays for holding print medium.

### BACKGROUND OF THE INVENTION

Nowadays printer use to have a print medium schedule as well as an input module view. The print medium schedule already shows the upcoming print medium requests. The input module view shows only a status of the input module. The print medium schedule only shows the next print medium request without taking into account if it will be possible to already load print medium for this request. The operator would like to have more information to perform loading and unloading actions on the plurality of input modules of the printer.

US 5081595 A describes a high speed electronic printing system in which the number of paper trays for supplying print media is substantially less than the number of different print media selections that can be programmed for each print job, with a system for identifying missing print media while printing together with an available paper tray into which the print media can be loaded to allow uninterrupted processing of print jobs.

The print medium may be paper, plastic, metal, wood, etc.

It is an object of the present invention to provide a method for the printer to improve the efficiency of loading, reloading and unloading print medium in the plurality of input modules of the printer.

### SUMMARY OF THE INVENTION

The method according to the invention, in order to achieve this object, comprises the steps of claim 1.

According to the method of the present invention It is clear for the user which input module can be used to load new print medium or reload the current print medium. It is also clear for the user that he can already load print medium for the next upcoming print medium request.

Based on rules - which will be elucidated in the section DETAILED DESCRIPTION OF THE EMBODIMENTS - it is first determined if it is already possible to (re)load a next needed print medium. The next needed print medium is the print medium that will cause the printer to stop if not loaded.

Nowadays' print medium schedules only show a next print medium request without taking into account if it will be possible to already load media for said request. Therefore it is advantageous that the method according to the invention shows a tray suggestion determined by the second determination and only shows said tray suggestion if it is possible for the operator to already deal with this upcoming print medium request, i.e. that the print medium can be loaded at all, i.e. without removing a loaded print medium that is needed earlier.

According to an embodiment the first metadata comprises a digital image of the input module and a status of the input module. The status of the input module is one out of a first status indicating that loading is possible, but there is no urgent need, a second status indicating that loading is needed, otherwise the print engine will stop printing within a configurable number of time units, a third status indicating that the print engine has stopped because recording media is needed, and a fourth status indicating that no print medium load is possible with the advice to check later.

According to an embodiment the second metadata comprises print medium properties and an amount of the print medium which is present in the input module.

According to an embodiment the method comprises the steps of the print controller changing, due to the first determination, the status of the input module and the user interface displaying the status change in the first window.

According to an embodiment the method comprises the steps of the print controller receiving, due to the second determination, a first trigger that the user operable item is pressed to open the input module determined according to the second determination or another input module, and the user interface displaying in a second window, a user selection list of recording media with on top the current loaded print medium followed by a list of recording media in an order of upcoming media requests, and the user interface receiving a selection of a print medium from the user selection list.

According to an embodiment the method comprises the steps of the print controller receiving a second trigger that the input module is closed and re-determining the first and second metadata of the input module, and the user interface displaying the first window with the re-determined first and second metadata.

According to an embodiment the method comprises the step of the print controller applying a fourth rule of the second set is applied when the third rule of the second set of rules fails, wherein the fourth rule is that a input module is selected that is lastly needed after a first upcoming print medium request.

According to an embodiment the method comprises the step of the print controller applying an additional rule when more than one input module complies with the first, second or third rule respectively, wherein the additional rule uniquely determines one input module of the more than one input modules by means of the positions of the more than one input modules in the printer.

According to an embodiment the method comprises the step of the print controller changing the status of the input module to the fourth status, when the fourth rule fails.

The present invention also relates to a printer according to claim 11.

According to an embodiment the user interface is at least one out of a central user interface implemented near the print engine, a user interface implemented on each input module of the printer and a remotely accessible user interface.

According to an embodiment the user interface is configured to display the first, second or third status only for the input module that is determined by the second determination.

The present invention also relates to a software medium comprising computer executable program code which, when executed by a computer, causes the computer to perform the steps of the method according to the invention.

### BRIEF DESCRIPTION OF THE DRAWINGS

Embodiment examples will now be described in conjunction with the drawings, wherein:
- FIG. 1: is a diagram of a general arrangement of a printer according to the present invention;
- FIG. 2: is a flow diagram of the method according to the present invention;
- FIG. 3: shows a user interface window representing an input module of a printer according to the present invention;
- FIG. 4: shows a user interface window representing an input module of a printer in which a suggested tray is indicated according to the method of the present invention; and
- FIG. 5: shows a user interface window of a list of selectable print media according to the method according to the present invention.

### DETAILED DESCRIPTION OF EMBODIMENTS

The present invention will now be described with reference to the accompanying drawings, wherein the same or similar elements are identified with the same reference numerals throughout the several views.

The embodiments are explained by taking in the examples a printing system comprising a print head or print assembly, like an inkjet printing system or an electro-photographical printing system. In principal a printing system in which any kind of print medium, any kind of marking material, and, if needed, any kind of finishing material is to be loaded and the kind of marking material is to be printed on the kind of print medium may be configured to use the methods according to the embodiments of the present invention.

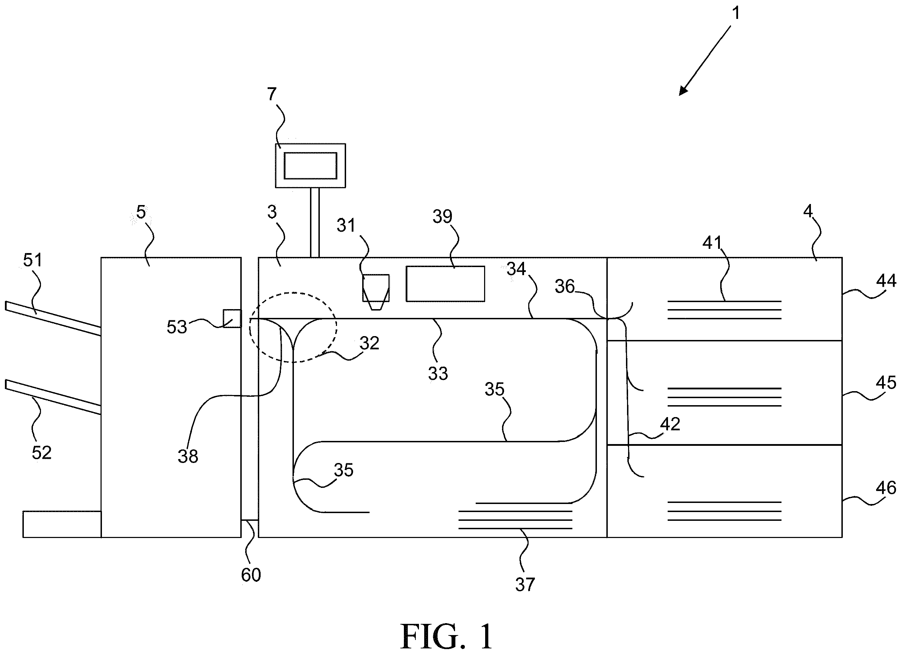

FIG. 1 shows schematically an exemplary printing system 1 in which the method according to the present invention is applicable. The printing system 1 comprises an output section 5, a print engine and control section 3 possibly containing one or more additional input modules 37, a local user interface 7 and an input section 4.

The output section 5, the print engine and control section 3 and the input section 4 may comprise sensors to sense the circumstances of the sheets when transported along a paper path from the input section 4 to the output section 5 which paper path will be elucidated hereinafter. The sensors are calibrated beforehand in order to assure that all measurement sensors involved in the method according to the present invention are calibrated and correctly operating, and to take sensor aging, pollution, environmental conditions like humidity and temperature into account when reading the sensor measurements.

The output section 5 comprises two supply material output holders 51, 52 for holding printed print medium. The printed print medium is transported from the print engine and control section 3 via an inlet 53 to the output section 5. The output section 5 is digitally connected by means of a cable 60 to the print engine and control section 3 for bidirectional data signal transfer. Other supply material output holders may be envisioned, for example a supply material output holder for residuals of ink or toner or a supply material output holder for waste paper in case of drilling actions, cutting actions or perforating actions. Depletions of such a supply material output holder may be scheduled according to the method of the invention.

The print engine and control section 3 comprises a print engine and a print controller 39 for controlling the printing process. The print controller 39 is a computer or server or a workstation, connected to the print engine and connected to the digital environment of the printing system, for example a network for transmitting a submitted print job to the printing system. The print controller 39 also comprises in storage a media catalogue software system (not shown) for print media which are profiled for use by the printing system 1 according to the method of the present invention. The print controller 39 also comprises a receiving section (not shown) for receiving print jobs submitted to the printing system 1.

The print engine comprises a print head or print assembly 31 for ejecting or fixing marking material to the print medium and a paper path 34, 32, 35 for transporting the print medium from an entry point 36 of the print engine and control section 3 to the inlet 53 of the output section 5. Along the paper path 34, 32, 35 sensors may be applied. The print head or print assembly 31 is positioned near the paper path section 34. While a print medium is transported along the paper path section 34, the print medium receives the marking material from the print head or print assembly 31. A next paper path section 32 is a flip unit for selecting a different subsequent paper path for simplex or duplex printing of the print medium. The flip unit 32 may be also used to flip a printed sheet of print medium after printing in simplex mode before the printed sheet leaves the print engine and control section 3 via a curved section 38 of the flip unit 32 and via the inlet 53 to the output section 5. In another embodiment of the printing system the curved section 38 of the flip unit 32 is not present and the turning of a simplex page has to be done via another paper path section 35 and leads to productivity loss. In another embodiment of the printing system an additional turning station - partly to replace the curved section 38 of the flip unit 32 - is configured outside the print engine and control section 3 between the print engine and control section 3 and the output section 5.

When the print medium has to be printed in a simplex mode, the print medium may directly by transported via the flip unit 32 to the inlet 53 of the output section 5.

When the print medium has to be printed in a duplex mode, the print medium is transported via the flip unit 32 to the other paper path section 35 for turning the print medium in order to switch front side and back side of the sheets. The sheets are then transported to the paper path section 34 again for printing on the rear side of the sheets by means of the print head or print assembly 31.

The print engine and control section 3 also comprises an additional input module 37 for holding print medium. Print medium may have to be input in the additional input module 37 in another orientation than an input orientation for the print medium holders 44, 45, 46.

The input section 4 comprises a plurality of input modules 44, 45, 46 for holding the print medium before transporting the sheets 41 of the print medium to the print engine and control section 3. Each input module comprises at least one tray for holding the print medium. As is well known in the art, each tray is supported on a lift mechanism and is thereby adjustable in height such that a topmost sheet on the stack of print medium is always held level with a branch of a feed line that is arranged in a fixed height, so that the topmost sheet can be supplied into the feed line by means of a feed roller.

Each input module 44, 45, 46 or even each tray in each input module is provided with art known sensing means (not shown). The sensing means is provided with level detector means for determining the amount of print medium sheets available in each tray of each input module. The sensing means furthermore comprise subtracting means for subtracting the available amount from a predetermined maximum amount to obtain an amount of print medium sheets which can be added to each tray. According to another embodiment the printing system comprises means for measuring the distance between a first level at which the tray or input module is filled with print medium up to the predetermined maximum amount and a second level up to which said tray or input module is actually filled with print medium. By measuring said distance, the amount of print medium which can be added can relatively easy be determined.

Sheets 41 of the print medium are guided from the input modules 44, 45, 46 by guiding means 42 to an outlet 36 for entrance in the print engine and control section 3. Sheets of the print medium are now guided from the input modules 44, 45, 46 to the left side of the input modules 44, 45, 46, but other configurations of the input modules may be envisioned for at least partly guiding the sheets to the right side. For these other configurations a suitable instruction for face up or face down loading of the print medium in the respective input module will be generated by the print controller.

FIG. 1 shows a plurality of input modules which are located on top of each other. The invention, however, also applies to a printing system comprising a plurality of input modules which are located beside each other. A combination of locations of the input modules on top of each other and beside each other may also be envisioned.

FIG. 1 shows a plurality of print medium output holders which are located on top of each other. The invention, however, also applies to a printing system comprising a plurality of print medium output holders which are located beside each other. A combination of locations of the print medium output holders on top of each other and beside each other may also be envisioned.

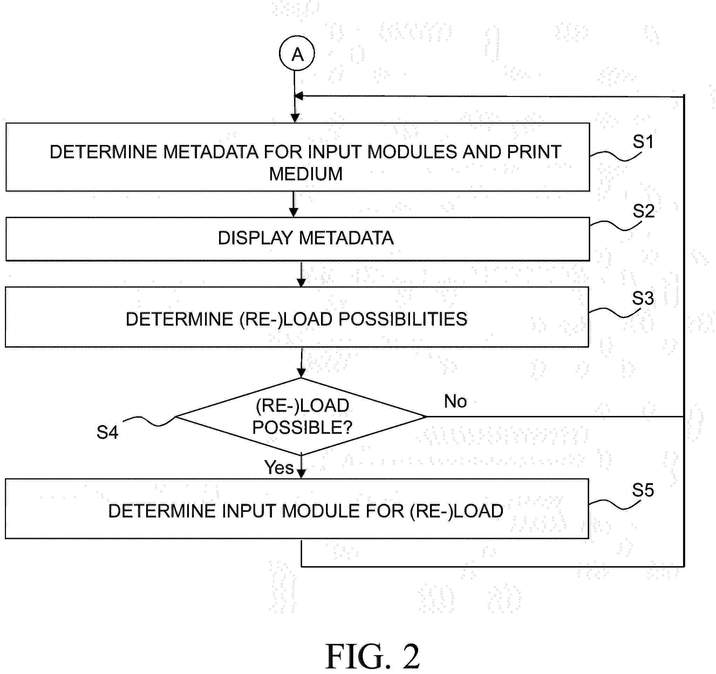

FIG. 2 shows a flow diagram of the method according to the present invention. The method starts in a starting point A and leads to a first step S1.

In the first step S1 the print controller determines for each input module 44, 45, 46 first metadata of the input module and second metadata of the print medium 41 which is present in the input module. The first metadata comprises a digital image of the input module 44, 45, 46 and a status of the input module 44, 45, 46. One of at least four statuses may occur for the input module 44, 45, 46:
- a first status indicating that loading is possible, but there is no urgent need
- a second status indicating that loading is needed, otherwise the print engine will stop printing within a configurable number of time units
- a third status indicating that the print engine has stopped because recording media is needed
- a fourth status indicating that no print medium load is possible with the advice to check later.
The second metadata comprises a type and an amount of print medium which is present in the input module.

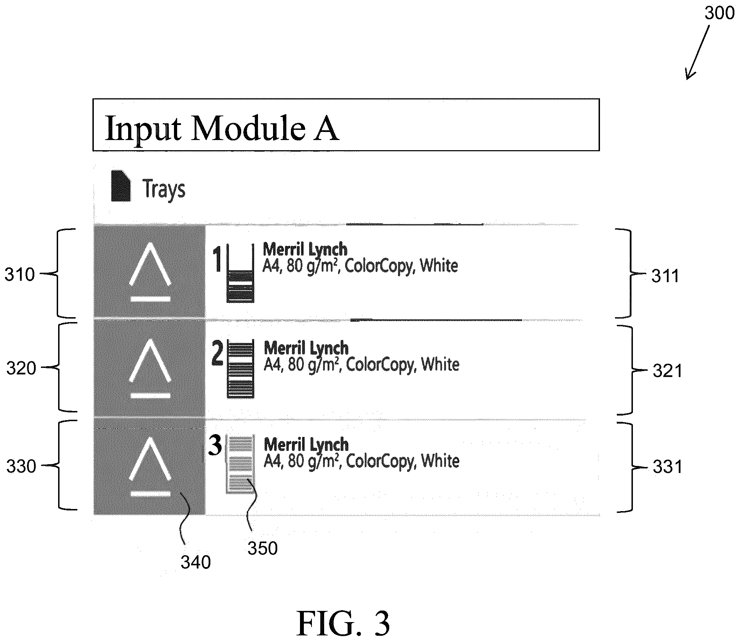

In a second step S2 the user interface 7 displays in a first window - as shown in FIG. 3 - for each input module 44, 45, 46 visual representations 310 of the first metadata and the second metadata and a user operable item 320 for at least opening (and optionally closing) the input module 44, 45, 46.

In a third step S3 the print controller determines by means of a first determination if it is possible to reload a print medium or load another print medium than the already loaded print medium in any of the input modules 44, 45, 46.

In a fourth step S4 it is checked if the first determination is positive or not. If the first determination is negative, the method returns to the first step S1.

If the first determination is positive, the method proceeds to a fifth step S5.

In the fifth step S5 the print controller determines by means of a second determination which input module is to be used for a reload or load of the appropriate print medium.

The method returns to the first step S1 at regular time intervals or at receipt of other process change triggers by the print controller. The method is implemented as monitoring software in the print controller which at regular time intervals or at other process change triggers received by the print controller executes the steps S1 - S4 as shown in FIG. 2. Example of process change triggers are an addition of a new print job to the print job queue, a change in the print order of the print jobs in the print job queue, a use of additional sheets due to disapproval of sheets or due to system errors in the paper path, a user action sequence of opening, filling and closing an input module, a user action sequence of opening, removing loaded sheets, replenish with sheets of another medium type, and closing an input module.

Recalculation needs to be carried out because sheets are used from the trays in the input modules and because a more accurate number of sheets loaded in the tray can be estimated or it can be detected that the tray is empty.

FIG. 3 shows an example of a user interface window 300 comprising a visual representation of an input module A. The input module A comprises 3 trays 310, 320, 330 for holding print medium. The trays 310, 320, 330 are numbered 1, 2 and 3 respectively. Another number of trays such as 1, 2, 4, 5, 6, etc. may be envisioned. There may be one of such a user interface window per PIM, but it is also possible to show up to three PIMs next to each other in a user interface window.

For input module A the trays 310, 320, 330 are shown with a type 311, 321, 331 of the print medium specified by print medium attributes, an amount 350 of the print medium in the tray as well as a user operable item 340 like a digital button to open the tray.

The trays 310, 320, 330 of input module A contain a print medium called "Merril Lynch" specified by print medium attributes as a size "A4", a weight 80 g/m², a quality "ColorCopy" and a colour "White".

The amount 350 of the print medium in the trays 310, 320, 330 is indicated by blocks of an amount unit. For example, an amount unit may comprise 500 sheets. The amount 350 of print medium in the tray 330 is approximately 1500 sheets, while the amount of print medium in the tray 310 is approximately 500 sheets.

By means of the first determination It is determined if it is already possible to reload a print medium or to load another print medium in order to increase a time before the print engine stops printing. If it is possible to (re)-load, then by means of the second determination it is also determined which tray to use for this (re)load action.

The second determination results in a status change of this tray. The status change takes even place before the operator or user is going to act according to the suggestion, i.e. according to the second determination. It can become: (1) loading is possible, but there is no urgent need, (2) loading is needed, otherwise the engine will stop within a (configurable) time period, for example within 15 minutes or (3) the engine has stopped, because print medium loading is needed.

If a print medium load is not possible - because it will only result in unloading media that is needed before - the status (0) is that "nothing is possible, check later".

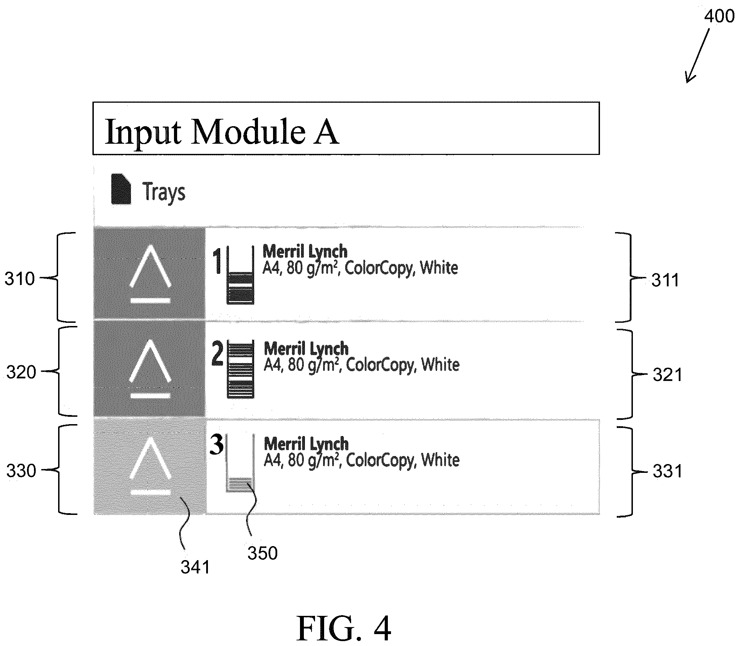

FIG. 4 shows an example of the user interface window 400 in a state (2). The user operable item 341 of the tray 330 has another visual appearance than the user operable item 340 in FIG. 3. The user operable item 341 may be orange coloured in order to indicate the state (2).

In state (1) and (3) the user interface windows are similar to the user interface window 400, but the visual appearance may be replaced by another visual appearance. For example, the orange colour may be replaced by another colour. For example the colour In state (3) may be red.

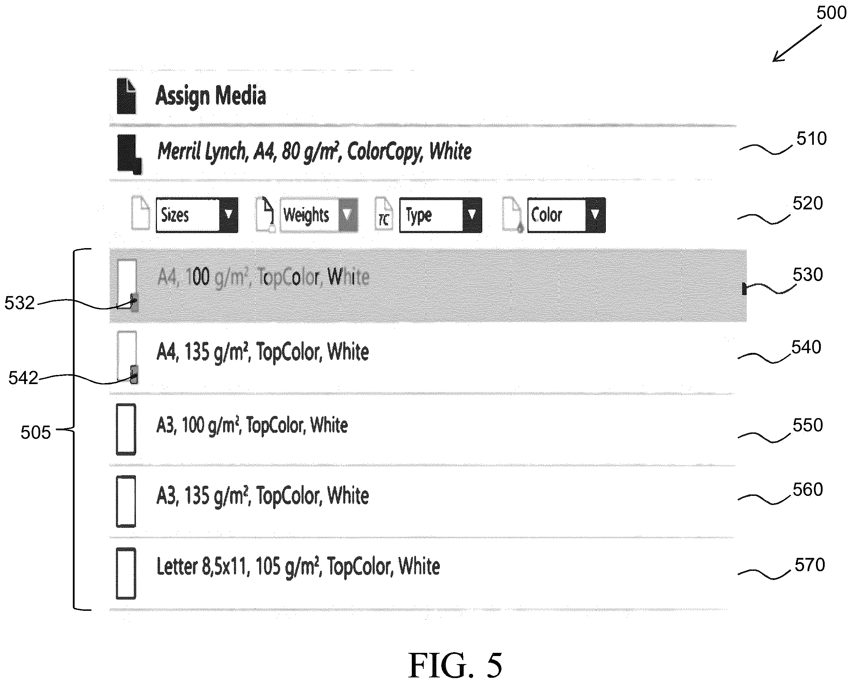

When the user presses the user operable item 340, 341 the tray 330 opens and another user interface window 500 pops up as shown in FIG. 5.

FIG. 5 shows the user interface window 500 titled "Assign Media". In a top bar 510 the print medium which has been currently loaded in the tray 330 is shown or has been loaded before is the tray 330 became empty. In a print medium list 505 alternative print media 530, 540, 550, 560, 570 are shown with their print attributes. The print media 530, 540, 550, 560, 570 shown in the list 505 may be used to replenish the tray 330. The print medium list 505 is preferably sorted in an order of upcoming print medium requests. The operator may assign a new print medium by selecting one of the print media 530, 540, 550, 560, 570 in the print medium list 505. The operator has also the possibility to leave the print medium as indicated in the top bar 510.

The number of print media shown in the print medium list 505 may vary or the print medium list 5050 may be provided with a scroll bar to scroll through print media.

The print media may be derived from a print media catalogue which is stored in a storage of the print controller 39 shown in FIG. 1.

A second bar 520 shows possibilities to filter the print medium list 505 on size, weight, type and colour of the print medium.

By means of an additional object, for example a small rectangle 532, 542, it is indicated that the corresponding print media 530, 540 are to be used according to next subsequent media requests.

In case of a reload a scenario is that the operator just puts additional sheets of the print medium indicated in the top bar 510 in the tray 330. In case of a print medium change the operator may unload the previous print medium and load the new print medium. After (re-)loading the operator closes the tray 330 and the user interface window 500 disappears from the user interface and the window 300 as shown in FIG. 3 appears again.

The operator is not forced to use the suggested tray 330 determined by the second determination. The operator may choose another tray 310, 320 at his own risk by pressing the corresponding user operable item in user interface window 300, 400.

In order to enable the previous scenario a suggested tray is determined by a second determination according to the present invention.

The second determination is done by means of a set of rules which are implemented in the print controller software.

### Rule 1

• If there is an empty tray with print medium assigned to it that is the same as the next print medium request then this is the tray to be used
► When more trays comply with this rule a PIM and tray is selected by a first sub-rule. A PIM is selected location-wise, for example the leftmost PIM or upper PIM, and within the selected PIM a tray is also selected location-wise, for example the highest tray.
• The first sub-rule may be implemented otherwise as long as only one tray is determined at last.

### Rule 2 (only applies if Rule 1 fails)

• If there is an empty tray then this is the tray to be suggested
► When more trays comply with this rule a tray is selected by means of a second sub-rule. According to the second sub-rule a tray is selected which has print medium assigned that is not used by the print jobs in the print queue. The print controller 39 controls the print queue which contains print jobs submitted to the printer 1.
► Or if no trays comply with the second sub-rule: When more trays comply a tray is selected by means of a third sub-rule. According to the third sub-rule a tray is selected which has print medium assigned that is sufficiently available to print the print jobs in the print queue
► When still more trays comply with the third sub-rule, the first sub-rule is applied, for example, the leftmost PIM and within that PIM the highest tray are selected
• Else we continue with Rule 3.

### Rule 3 (only applies if previous rules 1 and 2 have failed)

• A tray is selected with print medium assigned that is sufficiently available in the other trays to print the print jobs in the print queue
► When more trays comply a tray is selected that has been closed the longest time ago

If all the loaded print media (and maybe even more) is needed to print the print jobs in the print queue then continue with Rule 4

### Rule 4 (only applies if previous rules 1, 2 and 3 have failed)

Rule 4 searches for a tray with print medium that is needed only after the first upcoming print medium request.
• For each loaded print medium the trays are sorted from large to small on the current amount of print medium and it is assumed in the calculation of the current amounts of print medium that the print media are used in this sort order
• For the print jobs in the print queue a timeline is followed and to each tray an expected time is assigned when the printer 1 will start to print from this tray
• The tray that will be printed from as last in time is the candidate tray to be determined
• If the assigned time is beyond the next print medium request then the corresponding tray is to be suggested
• Else `Nothing can be done now'.

Following the hierarchical rules 1-4 results in only one tray suggestion, but that as soon as the user has opened a tray and has loaded a new print medium the next tray suggestion becomes visible. This is due to the fact that the steps S1 - S4 of the method are iterated upon as shown in FIG. 2. The iteration may be a continuous process. However, the iteration may be stopped for a while when it is no longer possible to already load a print medium for upcoming print medium requests.

If there is an uncertainty in the amount of loaded print medium or in the amount of print medium needed (for example because of error sheets or an error margin in a height detection in the trays), an uncertainty margin may be taken into account. Such an uncertainty margin may result in more `Nothing can be done now' situations, which actually means that the operator has to wait some time until the print medium usage becomes clearer. Worst case the print medium usage will be clear when the print job is finished. In the latter case however, Rule 1 and Rule 2 are not affected.

The user interface may be a central user interface 7 implemented near the print engine 31 as shown in FIG. 1.

According to another embodiment the user interface is implemented on each input module of the printer 1. A PIM user interface may be implemented instead of or beside the central user interface 7. A PIM user interface with a limited size may be used. By implementing the user interface on each input module the keep-running-operator is enabled to perform all tasks without a need to look at a user interface elsewhere. By showing the user interface windows 300, 400, 500 at the PIM user interface an interaction with the operator is supported right at the place where the operator is unloading or loading the print medium, i.e. the corresponding input module.

The PIM user interface windows 300, 400 may show the trays as a default view in which at a visual representation of the tray determined by the second determination, it is indicated that there is an upcoming print medium request that can be fulfilled as shown in FIG. 4.

Other visualizations may be implemented than the user interface windows shown in FIG. 3-5. E.g. A message field or shopping list that mentions that the operator has to load a print medium <A> in tray <n> or by an addition to a print job schedule in which also a suggested tray is mentioned according to the second determination.

The user interface may also be a remotely accessible user interface in a digital network environment to which the printer, i.e. the print controller, is connected. The print controller according to the present invention may have a remote user interface in a cloud environment. According to an embodiment the print controller is located in a cloud environment. A print job scheduler may also be located in a cloud environment.

## Claims

1. A method for planning a use of an input module of a printer (1), the printer comprising a print engine (31), a print controller (39) and a plurality of input modules (44, 45, 46) for holding print medium (41) to be printed upon by the print engine, the method comprising the steps of
- the print controller (39) determining (S1) for each input module first metadata of the input module and second metadata of the print medium which is present in the input module,
- the user interface (7) displaying (S2) in a first window (300) for each input module visual representations (310) of the first metadata and the second metadata and a user operable item (320) for at least opening the input module,
- the print controller determining (S3) by means of a first determination if it is possible to reload a print medium or load another print medium than the already loaded print medium in any of the input modules of the plurality, and
- the print controller, when the first determination is (S4) positive, determining (S5) by means of a second determination which input module is to be used for a reload or load of the appropriate print medium,
wherein
the first determination is based on a first set of executable by software implemented rules stored in the print controller and the second determination is based on a second set of executable by software implemented rules stored in the print controller,
and the method is **characterized by**
- the step of the print controller applying a first rule of the second set of rules that, if there is an empty input module with print medium assigned to said empty input module that is the same as a next print medium request, then said empty input module is the input module to be suggested,
- the step of the print controller applying a second rule of the second set of rules when the first rule of the second set fails, wherein the second rule is that, if there is an empty input module, then said empty input module is the input module to be suggested, and when more input modules comply with the second rule, a input module is selected with print medium assigned that is not used by print jobs submitted to a print job queue of the printer, or, if no such input module exists, a input module is selected with print medium assigned that is sufficiently available to print the print jobs in the print job queue, and
the step of the print controller applying a third rule of the second set of rules when the second rule of the second set of rules fails, wherein the third rule is that a input module is selected with print medium assigned that is sufficiently available in the other input modules to print the print jobs in the print job queue, and when more input modules comply with the third rule, a input module is selected that has been closed a longest time ago.

2. A method according to claim 1, wherein the first metadata comprises a digital image of the input module and a status of the input module.

3. A method according to claim 2, wherein the status of the input module is one out of a first status indicating that loading is possible, but there is no urgent need, a second status indicating that loading is needed, otherwise the print engine will stop printing within a configurable number of time units, a third status indicating that the print engine has stopped because recording media is needed, and a fourth status indicating that no print medium load is possible with the advice to check later.

4. A method according to any of the preceding claims, wherein the second metadata comprises print medium properties and an amount of the print medium which is present in the input module.

5. A method according to any of the claims 2 - 4, wherein the method comprises the steps of the print controller changing, due to the first determination, the status of the input module and the user interface displaying the status change in the first window.

6. A method according to any of the preceding claims, wherein the method comprises the steps of the print controller receiving, due to the second determination, a first trigger that the user operable item is pressed to open the input module determined according to the second determination or another input module, and the user interface displaying in a second window, a user selection list of recording media with on top the current loaded print medium followed by a list of recording media in an order of upcoming media requests, and the user interface receiving a selection of a print medium from the user selection list.

7. A method according to claim 6, wherein the method comprises the steps of the print controller receiving a second trigger that the input module is closed and re-determining the first and second metadata of the input module, and the user interface displaying the first window with the re-determined first and second metadata.

8. A method according to any of the preceding claims, wherein the method comprises the step of the print controller applying a fourth rule of the second set is applied when the third rule of the second set of rules fails, wherein the fourth rule is that a input module is selected that is lastly needed after a first upcoming print medium request.

9. A method according to any of the preceding claims, wherein the method comprises the step of the print controller applying an additional rule when more than one input module complies with the first, second or third rule respectively, wherein the additional rule uniquely determines one input module of the more than one input modules by means of the positions of the more than one input modules in the printer.

10. A method according to claim 8, wherein the method comprises the step of the print controller changing the status of the input module to the fourth status, when the fourth rule fails.

11. A printer comprising a print engine (31), a print controller (39), a user interface (7) and a plurality of input modules (44, 45, 46) for holding print medium (41) to be printed upon by the print engine, wherein the print controller and the user interface are configured to respectively execute the steps of the print controller and of the user interface of the method according to any of the claims 1 - 10.

12. A printer according claim 11, wherein the user interface is at least one out of a central user interface implemented near the print engine, a user interface implemented on each input module of the printer and a remotely accessible user interface.

13. A printer according to claim 11 or 12, wherein the first metadata comprises a digital image and a status of an input module of the plurality, the status of the input module is one out of a first status indicating that loading is possible, but there is no urgent need, a second status indicating that loading is needed, otherwise the print engine will stop printing within a configurable number of time units, a third status indicating that the print engine has stopped because recording media is needed, and a fourth status indicating that no print medium load is possible with the advice to check later, and the user interface is configured to display the first, second or third status only for the input module that is determined by the second determination.

14. Software medium comprising computer executable program code which, when executed by a computer, causes the computer to perform the steps of the method according to any of the claims 1 - 10.

## Patentansprüche

1. Ein Verfahren zum Planen einer Verwendung eines Eingabemoduls eines Druckers (1), wobei der Drucker eine Druckmaschine (31), eine Drucksteuerung (39) und eine Mehrzahl von Eingabemodulen (44, 45, 46) zum Halten eines Druckmediums (41), auf das durch die Druckmaschine gedruckt werden soll, umfasst, wobei das Verfahren die folgenden Schritte umfasst
- die Drucksteuerung (39) für jedes Eingabemodul erste Metadaten des Eingabemoduls und zweite Metadaten des Druckmediums, das sich in dem Eingabemodul befindet, bestimmt (S1),
- wobei die Benutzerschnittstelle (7) in einem ersten Fenster (300) für jedes Eingabemodul visuelle Darstellungen (310) der ersten Metadaten und der zweiten Metadaten und ein vom Benutzer bedienbares Element (320) anzeigt (S2), um zumindest das Eingabemodul zu öffnen,
- die Drucksteuerung mittels einer ersten Bestimmung feststellt (S3), ob es möglich ist, ein Druckmedium nachzuladen oder ein anderes Druckmedium als das bereits geladene Druckmedium in irgendeines der Eingabemodule der Vielzahl zu laden, und
- die Drucksteuerung, wenn die erste Bestimmung positiv ist (S4), mittels einer zweiten Bestimmung bestimmt (S5), welches Eingabemodul für ein Nachladen oder Laden des entsprechenden Druckmediums zu verwenden ist,
wobei
die erste Bestimmung basiert auf einem ersten Satz von ausführbaren, durch Software implementierten Regeln, die in der Drucksteuerung gespeichert sind, und die zweite Bestimmung basiert auf einem zweiten Satz von ausführbaren, durch Software implementierten Regeln, die in der Drucksteuerung gespeichert sind, und die Methode ist **gekennzeichnet durch**
- den Schritt, dass die Drucksteuerung eine erste Regel des zweiten Regelsatzes anwendet, die besagt, dass, wenn es ein leeres Eingabemodul gibt, dessen Druckmedium dem leeren Eingabemodul zugewiesen ist, das dasselbe ist wie eine nächste Druckmediumanforderung, dann ist das leere Eingabemodul das vorzuschlagende Eingabemodul,
- der Schritt, bei dem die Drucksteuerung eine zweite Regel des zweiten Satzes von Regeln anwendet, wenn die erste Regel des zweiten Satzes fehlschlägt, wobei die zweite Regel darin besteht, dass, wenn es ein leeres Eingangsmodul gibt, das leere Eingangsmodul das vorzuschlagende Eingangsmodul ist, und wenn mehr Eingangsmodule die zweite Regel erfüllen, ein Eingangsmodul ausgewählt wird, dem ein Druckmedium zugewiesen ist, das nicht von Druckaufträgen verwendet wird, die an eine Druckauftragswarteschlange des Druckers übermittelt wurden, oder, wenn kein solches Eingangsmodul existiert, ein Eingangsmodul ausgewählt wird, dem ein Druckmedium zugewiesen ist, das ausreichend verfügbar ist, um die Druckaufträge in der Druckauftragswarteschlange zu drucken, und
den Schritt, dass die Drucksteuerung eine dritte Regel des zweiten Satzes von Regeln anwendet, wenn die zweite Regel des zweiten Satzes von Regeln fehlschlägt, wobei die dritte Regel darin besteht, dass ein Eingabemodul ausgewählt wird, dem ein Druckmedium zugewiesen ist, das in den anderen Eingabemodulen ausreichend verfügbar ist, um die Druckaufträge in der Druckauftragswarteschlange zu drucken, und wenn mehr Eingabemodule die dritte Regel erfüllen, wird ein Eingabemodul ausgewählt, das am längsten geschlossen ist.

2. Verfahren nach Anspruch 1, wobei die ersten Metadaten ein digitales Bild des Eingangsmoduls und einen Status des Eingangsmoduls umfassen.

3. Verfahren nach Anspruch 2, wobei der Status des Eingabemoduls einer ist aus einem ersten Status, der anzeigt, dass das Laden möglich ist, aber kein dringender Bedarf besteht, einem zweiten Status, der anzeigt, dass das Laden erforderlich ist, andernfalls wird die Druckmaschine den Druck innerhalb einer konfigurierbaren Anzahl von Zeiteinheiten stoppen, einem dritten Status, der anzeigt, dass die Druckmaschine gestoppt hat, weil Aufzeichnungsmedien benötigt werden, und einem vierten Status, der anzeigt, dass kein Laden von Druckmedien möglich ist, mit dem Hinweis, dies später zu überprüfen.

4. Verfahren nach einem der vorhergehenden Patentansprüche, wobei die zweiten Metadaten Druckmedium-Eigenschaften und eine Menge des Druckmediums umfassen, die im Eingabemodul vorhanden ist.

5. Verfahren nach einem der Patentansprüche 2 - 4, wobei das Verfahren die Schritte umfasst, dass die Drucksteuerung aufgrund der ersten Bestimmung den Status des Eingabemoduls ändert und die Benutzerschnittstelle die Statusänderung im ersten Fenster anzeigt.

6. Verfahren nach einem der vorhergehenden Patentansprüche, wobei das Verfahren die Schritte umfasst, dass die Drucksteuerung aufgrund der zweiten Bestimmung einen ersten Auslöser empfängt, dass das vom Benutzer bedienbare Element gedrückt wird, um das gemäß der zweiten Bestimmung bestimmte Eingabemodul oder ein anderes Eingabemodul zu öffnen, und dass die Benutzerschnittstelle in einem zweiten Fenster eine Benutzerauswahlliste von Aufzeichnungsmedien anzeigt, wobei an erster Stelle das aktuell geladene Druckmedium steht, gefolgt von einer Liste von Aufzeichnungsmedien in der Reihenfolge der anstehenden Medienanforderungen, und dass die Benutzerschnittstelle eine Auswahl eines Druckmediums aus der Benutzerauswahlliste empfängt.

7. Verfahren nach Anspruch 6, wobei das Verfahren die Schritte umfasst, dass die Drucksteuerung einen zweiten Auslöser empfängt, dass das Eingabemodul geschlossen ist, und die ersten und zweiten Metadaten des Eingabemoduls neu bestimmt, und die Benutzerschnittstelle das erste Fenster mit den neu bestimmten ersten und zweiten Metadaten anzeigt.

8. Verfahren nach einem der vorhergehenden Patentansprüche, wobei das Verfahren den Schritt umfasst, dass die Drucksteuerung eine vierte Regel des zweiten Satzes anwendet, wenn die dritte Regel des zweiten Satzes von Regeln fehlschlägt, wobei die vierte Regel darin besteht, dass ein Eingabemodul ausgewählt wird, das als letztes nach einer ersten anstehenden Druckmedienanforderung benötigt wird.

9. Verfahren nach einem der vorhergehenden Patentansprüche, wobei das Verfahren den Schritt umfasst, dass die Drucksteuerung eine zusätzliche Regel anwendet, wenn mehr als ein Eingabemodul die erste, zweite bzw. dritte Regel erfüllt, wobei die zusätzliche Regel ein Eingabemodul der mehr als ein Eingabemodule anhand der Positionen der mehr als ein Eingabemodule im Drucker eindeutig bestimmt.

10. Verfahren nach Anspruch 8, wobei das Verfahren den Schritt umfasst, dass die Drucksteuerung den Status des Eingabemoduls auf den vierten Status ändert, wenn die vierte Regel fehlschlägt.

11. Ein Drucker, der eine Druckmaschine (31), eine Drucksteuerung (39), eine Benutzerschnittstelle (7) und eine Mehrzahl von Eingabemodulen (44, 45, 46) zum Halten eines Druckmediums (41), auf das durch die Druckmaschine gedruckt werden soll, umfasst, wobei die Drucksteuerung und die Benutzerschnittstelle so konfiguriert sind, dass sie jeweils die Schritte der Drucksteuerung und der Benutzerschnittstelle des Verfahrens gemäß einem der Patentansprüche 1 - 10 ausführen.

12. Drucker nach Anspruch 11, wobei die Benutzerschnittstelle mindestens eine aus einer zentralen Benutzerschnittstelle, die in der Nähe der Druckmaschine implementiert ist, einer Benutzerschnittstelle, die auf jedem Eingabemodul des Druckers implementiert ist, und einer aus der Ferne zugänglichen Benutzerschnittstelle ist.

13. Drucker nach Anspruch 11 oder 12, wobei die ersten Metadaten ein digitales Bild und einen Status eines Eingabemoduls der Vielzahl umfassen, wobei der Status des Eingabemoduls einer ist aus einem ersten Status, der anzeigt, dass ein Laden möglich ist, aber kein dringender Bedarf besteht, einem zweiten Status, der anzeigt, dass ein Laden erforderlich ist, andernfalls wird die Druckmaschine den Druck innerhalb einer konfigurierbaren Anzahl von Zeiteinheiten stoppen, einem dritten Status, der anzeigt, dass die Druckmaschine angehalten hat, weil ein Aufzeichnungsmedium benötigt wird, und einem vierten Status, der anzeigt, dass kein Druckmedium geladen werden kann, mit dem Hinweis, dies später zu überprüfen, und die Benutzerschnittstelle ist so konfiguriert, dass sie den ersten, zweiten oder dritten Status nur für das Eingabemodul anzeigt, das durch die zweite Bestimmung ermittelt wird.

14. Softwaremedium, das einen computerausführbaren Programmcode enthält, der, wenn er von einem Computer ausgeführt wird, den Computer veranlasst, die Schritte des Verfahrens nach einem der Patentansprüche 1 - 10 durchzuführen.

## Revendications

1. Procédé de planification de l'utilisation d'un module d'entrée d'une imprimante (1), l'imprimante comprenant un moteur d'impression (31), un contrôleur d'impression (39) et plusieurs modules d'entrée (44, 45, 46) pour contenir le support d'impression (41) devant être imprimé par le moteur d'impression, le procédé comprenant les étapes suivantes
- le contrôleur d'impression (39) détermine (S1) pour chaque module d'entrée les premières métadonnées du module d'entrée et les secondes métadonnées du support d'impression présent dans le module d'entrée,
- l'interface utilisateur (7) affiche (S2) dans une première fenêtre (300) pour chaque module d'entrée des représentations visuelles (310) des premières métadonnées et des secondes métadonnées, ainsi qu'un élément utilisable par l'utilisateur (320) pour au moins ouvrir le module d'entrée,
- le contrôleur d'impression détermine (S3) au moyen d'une première détermination s'il est possible de recharger un support d'impression ou de charger un autre support d'impression que le support déjà chargé dans l'un des modules d'entrée de la pluralité, et
- le contrôleur d'impression, lorsque la première détermination est (S4) positive, détermine (S5) au moyen d'une deuxième détermination quel module d'entrée doit être utilisé pour un rechargement ou un chargement du support d'impression approprié,
dans lequel
la première détermination est basée sur un premier ensemble de règles exécutables par un logiciel stocké dans le contrôleur d'impression et la seconde détermination est basée sur un second ensemble de règles exécutables par un logiciel stocké dans le contrôleur d'impression,
et la méthode est **caractérisée par**
- l'étape au cours de laquelle le contrôleur d'impression applique une première règle du deuxième ensemble de règles selon laquelle, s'il existe un module d'entrée vide auquel est attribué un support d'impression identique à une prochaine demande de support d'impression, ledit module d'entrée vide est le module d'entrée à suggérer,
- l'étape au cours de laquelle le contrôleur d'impression applique une deuxième règle du deuxième ensemble de règles lorsque la première règle du deuxième ensemble échoue, dans laquelle la deuxième règle est que, s'il existe un module d'entrée vide, ledit module d'entrée vide est le module d'entrée à suggérer, et lorsque plusieurs modules d'entrée sont conformes à la deuxième règle, un module d'entrée est sélectionné avec un support d'impression attribué qui n'est pas utilisé par les travaux d'impression soumis à une file d'attente de travaux d'impression de l'imprimante, ou, si aucun module d'entrée de ce type n'existe, un module d'entrée est sélectionné avec un support d'impression attribué qui est suffisamment disponible pour imprimer les travaux d'impression dans la file d'attente de travaux d'impression, et
l'étape consistant pour le contrôleur d'impression à appliquer une troisième règle du deuxième ensemble de règles lorsque la deuxième règle du deuxième ensemble de règles échoue, dans laquelle la troisième règle consiste à sélectionner un module d'entrée auquel est attribué un support d'impression suffisamment disponible dans les autres modules d'entrée pour imprimer les travaux d'impression dans la file d'attente des travaux d'impression, et lorsque davantage de modules d'entrée sont conformes à la troisième règle, un module d'entrée est sélectionné qui a été fermé depuis le plus longtemps.

2. Procédé selon la revendication 1, dans lequel les premières métadonnées comprennent une image numérique du module d'entrée et un état du module d'entrée.

3. Procédé selon la revendication 2, dans lequel le statut du module d'entrée est l'un des suivants : un premier statut indiquant que le chargement est possible, mais qu'il n'y a pas de besoin urgent, un deuxième statut indiquant que le chargement est nécessaire, sinon le moteur d'impression arrêtera l'impression dans un nombre configurable d'unités de temps, un troisième statut indiquant que le moteur d'impression s'est arrêté parce qu'un support d'enregistrement est nécessaire, et un quatrième statut indiquant qu'aucun chargement de support d'impression n'est possible, avec le conseil de vérifier plus tard.

4. Procédé selon l'une quelconque des revendications précédentes, dans lequel les secondes métadonnées comprennent les propriétés du support d'impression et une quantité du support d'impression présent dans le module d'entrée.

5. Procédé selon l'une des revendications 2 à 4, dans lequel le procédé comprend les étapes suivantes : le contrôleur d'impression modifie, en raison de la première détermination, l'état du module d'entrée et l'interface utilisateur affiche le changement d'état dans la première fenêtre.

6. Procédé selon l'une des revendications précédentes, dans lequel le procédé comprend les étapes suivantes : le contrôleur d'impression reçoit, en raison de la seconde détermination, un premier déclencheur indiquant que l'élément actionnable par l'utilisateur est pressé pour ouvrir le module d'entrée déterminé selon la seconde détermination ou un autre module d'entrée, et l'interface utilisateur affiche dans une seconde fenêtre une liste de sélection de supports d'enregistrement avec en haut le support d'impression actuellement chargé suivi d'une liste de supports d'enregistrement dans un ordre de demandes de supports à venir, et l'interface utilisateur reçoit une sélection d'un support d'impression à partir de la liste de sélection de l'utilisateur.

7. Procédé selon la revendication 6, dans lequel le procédé comprend les étapes suivantes : le contrôleur d'impression reçoit un second déclencheur indiquant que le module d'entrée est fermé et redétermine les premières et secondes métadonnées du module d'entrée, et l'interface utilisateur affiche la première fenêtre avec les premières et secondes métadonnées redéterminées.

8. Procédé selon l'une quelconque des revendications précédentes, dans lequel le procédé comprend l'étape consistant pour le contrôleur d'impression à appliquer une quatrième règle du deuxième ensemble lorsque la troisième règle du deuxième ensemble de règles échoue, la quatrième règle consistant à sélectionner un module d'entrée qui est nécessaire en dernier lieu après une première demande de support d'impression à venir.

9. Procédé selon l'une quelconque des revendications précédentes, dans lequel le procédé comprend l'étape consistant pour le contrôleur d'impression à appliquer une règle supplémentaire lorsque plus d'un module d'entrée est conforme à la première, à la deuxième ou à la troisième règle respectivement, la règle supplémentaire déterminant de manière unique un module d'entrée parmi les plusieurs modules d'entrée au moyen des positions des plusieurs modules d'entrée dans l'imprimante.

10. Procédé selon la revendication 8, dans lequel le procédé comprend l'étape consistant pour le contrôleur d'impression à modifier l'état du module d'entrée vers le quatrième état, lorsque la quatrième règle échoue.

11. Imprimante comprenant un moteur d'impression (31), un contrôleur d'impression (39), une interface utilisateur (7) et une pluralité de modules d'entrée (44, 45, 46) destinés à contenir le support d'impression (41) sur lequel le moteur d'impression doit imprimer, dans laquelle le contrôleur d'impression et l'interface utilisateur sont configurés respectivement pour exécuter les étapes du contrôleur d'impression et de l'interface utilisateur du procédé selon l'une quelconque des revendications 1 à 10.

12. Imprimante selon la revendication 11, dans laquelle l'interface utilisateur est au moins l'une parmi une interface utilisateur centrale implémentée près du moteur d'impression, une interface utilisateur implémentée sur chaque module d'entrée de l'imprimante et une interface utilisateur accessible à distance.

13. Imprimante selon la revendication 11 ou 12, dans laquelle les premières métadonnées comprennent une image numérique et un état d'un module d'entrée de la pluralité, l'état du module d'entrée est l'un parmi un premier état indiquant que le chargement est possible, mais qu'il n'y a pas de besoin urgent, un deuxième état indiquant que le chargement est nécessaire, sinon le moteur d'impression s'arrêtera d'imprimer dans un nombre configurable d'unités de temps, un troisième état indiquant que le moteur d'impression s'est arrêté parce qu'un support d'enregistrement est nécessaire, et un quatrième état indiquant qu'aucun chargement de support d'impression n'est possible avec le conseil de vérifier plus tard, et l'interface utilisateur est configurée pour afficher le premier, le deuxième ou le troisième état uniquement pour le module d'entrée qui est déterminé par la deuxième détermination.

14. Support logiciel comprenant un code de programme exécutable par ordinateur qui, lorsqu'il est exécuté par un ordinateur, amène l'ordinateur à exécuter les étapes du procédé selon l'une quelconque des revendications 1 - 10.
